Europäisches Patentamt

European Patent Office

Office européen des brevets

(11) Publication number: **0 331 428**
**A2**

# EUROPEAN PATENT APPLICATION

(21) Application number: 89301972.9

(22) Date of filing: 28.02.89

(51) Int. Cl.⁴: **G 01 V 1/135**
**G 10 K 11/04**

(30) Priority: **29.02.88 US 162271**

(43) Date of publication of application:
**06.09.89 Bulletin 89/36**

(84) Designated Contracting States: **ES FR GB NL**

(71) Applicant: **WESTERN ATLAS INTERNATIONAL, INC.**
**P.O. Box 1407**
**Houston Texas 77251-1407 (US)**

(72) Inventor: **Dick, Charles Warren**
**15611 Whitewater Lane**
**Houston Texas 77079 (US)**

(74) Representative: **Godsill, John Kenneth et al**
**Haseltine Lake & Co. Hazlitt House 28 Southampton**
**Buildings Chancery Lane**
**London WC2A 1AT (GB)**

(54) Method and apparatus for generating seismic waves.

(57) A method and apparatus for generating a seismic wave in a body of water is disclosed. A resonant standing wave is generated in a fluid (16) disposed in a container of predetermined length. A device located within the container excites the fluid into oscillation. Oscillation is maintained by continuing to provide energy to the fluid to compensate for losses due to fluid friction. Also located within the container are movable members which change the resonant frequency of the fluid, thus providing a device for generating discreet or swept frequencies in a desired range restricted by the size of the apparatus. The standing wave thus created is radiated through the container into the surrounding water and into the earth, eventually detected by seismic sensors located along the surface of the earth.

EP 0 331 428 A2

**Description**

## METHOD AND APPARATUS FOR GENERATING SEISMIC WAVES

This invention relates to a method and apparatus for generating seismic signals in the earth. Historically, an early technique of generating seismic signals in water covered environments was by using explosives. A major disadvantage with explosives was the risk of injury, and the resulting harm to sea life. Explosives were subsequently replaced by other less expensive and destructive sources. One such early seismic source was generally known as a sparker. A high voltage charge was generated between an anode and a cathode, generating an acoustic wave in the surrounding water. A major disadvantage in using sparkers again was safety. The required charge placed across the terminals was extremely high. Often crewmen were critically injured by exposed transmission lines or when the sparker misfired when being deployed or retrieved.

Sparkers were eventually replaced by gas exploders. Exploders worked on the principle of introducing a mixture of gas and oxygen into a chamber having an external rubber sleeve. The mixture was combusted by a spark, resulting in a rapid expansion of the rubber sleeve which generated the seismic pulse. Gas exploders were considered to be inefficient and presented a high risk of harm to crewman because of the volatile nature of the mixture. The seismic industry searched for safer and more efficient seismic signal generators.

A less expensive, more efficient and less hazardous seismic source was developed which operated on compressed air. A chamber in an air gun was pressurized to a predetermined point which depended upon the size of the chamber. Once the gun was pressurized, a quick acting valve was opened to the outside where the pressurized air explosively excited, generating a seismic signal in the water. The frequency of the signal could be controlled by providing specific air-gun volumes in combination. Air guns were very efficient for the period, and were much less hazardous than any previous seismic source. A disadvantage in using air guns was that the seismic signal signature was affected by the expanding bubbles (bubble pulse) once the air was ejected into the water.

To try and dispose of the bubble pulse in the air gun signature, a seismic source based upon a similar premise was developed which used the medium in which it was disposed to cause the seismic signal. Water guns are hydraulically actuated devices which use water ejected at a high rate of speed to generate the seismic signal. The water is ejected as a unitary plug or slug which causes a cavitation in the water. Collapse of the cavitation causes the seismic signal. A disadvantage in using water guns is the frequency spectrum obtained. Just as when using air guns, many water guns must be combined to obtain the desired frequency spectrum. Another disadvantage is that the frequency can not be generated incrementally within a short period of time, similar to that obtained in vibratory seismic signal generators used on land.

None of the techniques described above has proven to be satisfactory and there remains a long felt but unsatisfied need to provide such a seismic source capable of sequentially generating or sweeping a range of frequencies within a short period of time.

The present invention provides a method and apparatus for generating a seismic signal in the earth, the apparatus located within a body of water. In general, a resonant standing wave is generated within a housing using a fluid. The apparatus can take various forms, two of which are described herein.

In one embodiment of the invention, a pair of resilient end members are positioned within the housing to effectively define a cavity therebetween; the end members being spaced apart by a predetermined distance. A fluid is contained by the housing and located between the two end members. The fluid is excited into oscillation by an actuator located within the cavity to produce a resonant standing wave. The created standing wave preferably is generated in whole or half wavelengths.

In another embodiment of the present invention, a single resilient end member is spaced a predetermined distance from a non-resilient, non-compressible member defining a substantially similar cavity as mentioned above. The fluid located between the members is oscillated into resonance creating a standing wave as above, but produces a wave of quarter-wavelength increments. Thus, one-quarter, one-half, three-quarters and whole wavelengths may be created, depending on the length of the housing.

This invention also provides in some embodiments a means for readily varying the resonant frequency of the standing wave over a period of time. In each of the embodiments mentioned above, the distance between the end members may be rapidly changed. The ability to change the distance provides a means for sweeping a range of frequencies or for generating several discreet frequencies as the operator desires.

It is one advantage of preferred embodiments of this invention that an acoustic source which is highly energy efficient can be provided. This results because a resonant wave requires only small amounts of energy to maintain the resonance. Another advantage is that the frequency of the aquatic seismic source may be readily changed within a short period of time. Yet another advantage is that the resonant signal generated by the source is extremely clean, containing essentially no noise resulting from the actual generation of the signal as do hydraulic or pneumatic seismic sources.

A more detailed explanation of the present invention may be obtained by reference to the following detailed description of preferred embodiments and by reference to the drawing figures, wherein:
Figure 1 is a schematic representation of one embodiment of the operation of the inventive method;

Figure 2 is a schematic representation showing another embodiment of the inventive method;

Figure 3 is a general illustration of a vessel towing a seismic streamer cable and at least one seismic source;

Figure 4 is an elevational view in cross-section of one embodiment of the inventive seismic source; and

Figure 5 is an elevational view in cross-section of another embodiment of the inventive seismic source.

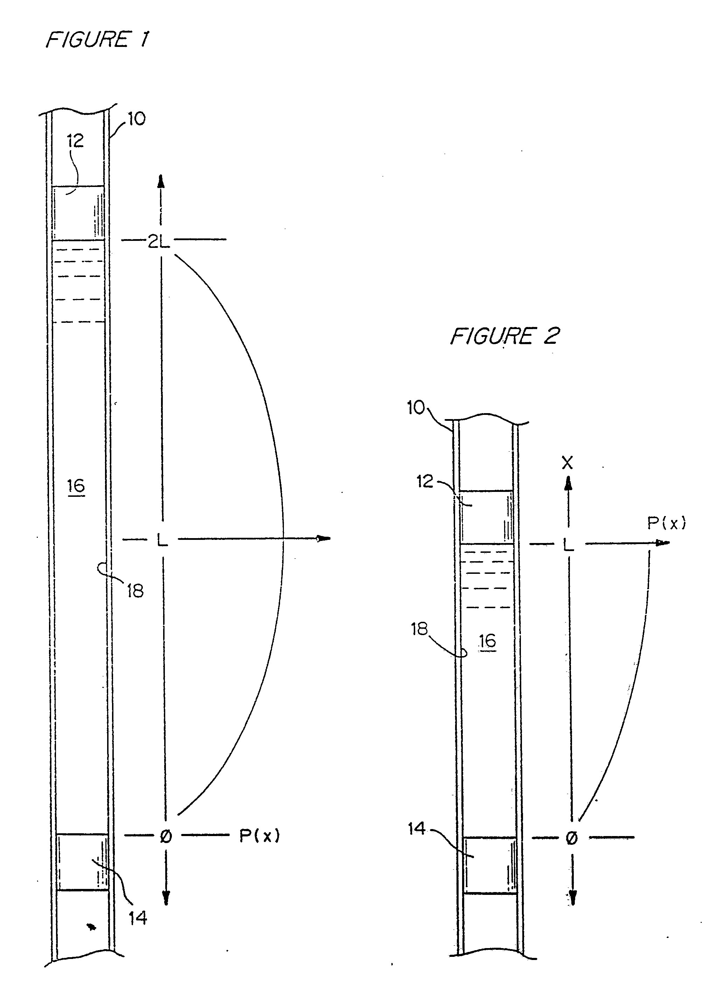

The fundamental operational theory of the present invention is described in United States Patent 4,671,379 assigned to Petrophysical Services, Inc. of Mountain View California, and incorporated herein by reference. Reference is also made to United States Patent Application Serial Number 07/136,148 filed December 28, 1987, assigned to the assignee of this application incorporated herein by reference. However, a brief description is provided herein with reference to Figures 1 and 2.

As shown in the Figures, a length of tubing 10 is substantially closed at one end by an end member, illustrated schematically as 12. A second end member 14 is located within the tube near the opposite end a preselect distance from end member 12. Both end members substantially seal the tubing 10. A fluid 16 is captured and maintained in the cavity 18 between end members 12 and 14. In an embodiment of the invention as shown in Figure 1, end members 12 and 14 should be resilient. In the embodiment schematically illustrated in Figure 2, at least one end member such as 14 should be rigid for reasons which will become apparent below.

The described embodiment creates a desired acoustic impedance mismatch between the fluid 16 and the end members 12 and 14. In the embodiment shown in Figure 1, end members 12 and 14 would have a lower acoustic impedance than the fluid 16. In the embodiment illustrated in Figure 2, only one of the end members 12 or 14 should have an acoustic impedance greater than the fluid; the other end member should have an impedance lesser than the fluid. In each of the embodiments generally described above, the end members 12 and 14 are spaced from one another so that when the fluid captured therebetween is excited into oscillation, a standing wave is generated in the fluid. In each of the Figures, the length of the longitudinal axis of the cavity 18 is shown along the line X. The numeral 0 indicates the location of the innermost side of one end member such as 12. The length along the longitudinal axis X, wherein the peak pressure amplitude occurs in a sinusoidal wave is indicated by the legend L which is equal to one-half X. Twice the distance L is the location where the pressure excursion decays to zero, which in resonance occurs at the inner surface of the opposite end member 14.

The pressure existing within the cavity 18 at resonance is a function of the location along the tubing 10 between the end members 12 and 14, and the time, as given by the expression:

$P(X,t) = P_O \sin (\pi Ct/2L) \sin (\pi X/2L) + P_B$, where:

$C$ = the speed of sound in the fluid under pressure;
$P_B$ = the static pressure of the fluid;
$P_O$ = the maximum driven dynamic pressure of the fluid;
$t$ = time; and
$X$ = the distance between the inner surfaces of the end members 12 and 14.

From the above expression, the frequency of oscillation is given by the expression:

$f = C/4L$,

where:
$f$ = the oscillation frequency of the fluid; and
$L$ = the length along the longitudinal axis
where the peak pressure amplitude occurs

In the embodiment of Figure 1, fluid motion is zero at X equal to L, and maximum at X equal to zero and at X equal to twice L. In Figure 2, fluid motion is zero at X equal to L and maximum at X equal that the oscillation frequency of the fluid 16 between the end members 12 and 14 may be varied by changing the distance between the end members. This frequency range is preferably from 5 hertz (Hz) up to and including 500 Hz. Frequencies below 5 Hz. may also be generated by this invention.

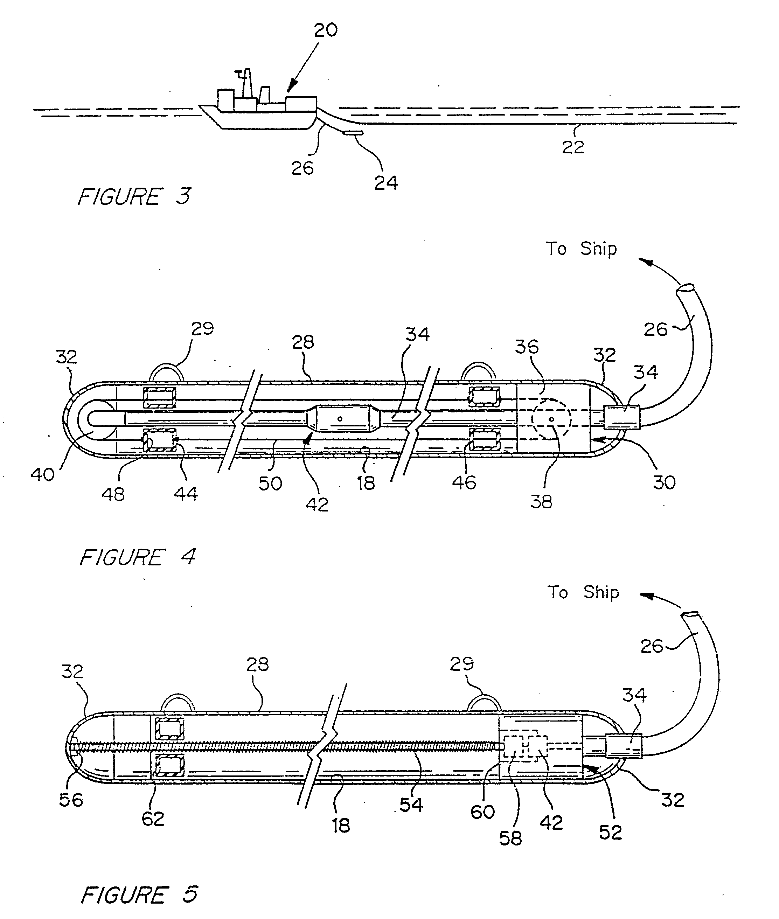

Figure 3 is a general elevational illustration of a vessel towing a seismic streamer cable and at least one seismic source such as the one described herein. The Figure generally illustrates a ship 20 towing at least one seismic streamer cable 22 which contains a plurality of seismic sensors, each spaced at regular intervals along its length. At least one seismic source 24 is also shown being towed behind the ship 20 coupled by an umbilical 26. The seismic streamer cable 22 and the source 24 are typically towed at a predetermined depth below the water surface as is well known in the art.

Figure 4 is an elevational view in cross-section of one embodiment of the seismic source utilizing the concept initially discussed above. The seismic source generally comprises an elongate tubular housing 28. The housing may have several coupling points located around the exterior such as the rings generally indicated as 29. The housing is open at each end so as to facilitate receipt and removal of a resonance generator generally indicated as 30 to be described below. The housing 28 is closed and made substantially fluidtight by end caps generally indicated as 32. At least one end cap contains a connector 34 for receiving an end of the umbilical 26 for coupling the source 24 and enclosed generator 30 to the vessel. The end caps 32 may be convex in shape to streamline the ends of the housing. The housing and the end caps may be constructed from stainless steel or other high strength material such as polyvinylchloride (PVC) plastics or aluminum.

The resonance generator 30 is generally comprised of a length of conduit 34 which is axially located within the housing 28. One end of the conduit 34 is coupled to the umbilical 26 and may contain a motor generally indicated as 36. The motor 36 may have a drive attached to a pulley 38 which is driven by hydraulic fluid, air or electricity supplied through the umbilical 26. The opposite end of the conduit 34 may have another pulley 40 attached thereto. Midway along the conduit 34 may be an actuator assembly 42 containing diaphragms or ports disposed about its circumference. On each side of the actuator assembly 42, and slidably received along the conduit 34, may be end members 44 and 46 similar to those described earlier in reference to Figure 1. Each end member 44 and 46 may be constructed of a resilient material such as rubber or plastic and define a bladder shown as 48 and filled with air or other fluid. The material comprising the end members and the amount of fluid contained therein may be determined based on the frequencies to be generated by one skilled in the art of acoustics. In a preferred embodiment, the end members 44 and 46 may be interconnected to each other by way of a cable 50 which passes around pulleys 38 and 40. The end members may be interconnected in such a manner by the cable 50 so they will move in opposite directions when the motor 36 is actuated, thus changing the volume of the cavity 18 between the end members.

The actuator assembly 42 mentioned above may be of the type disclosed in the incorporated patents and applications mentioned above. The actuator assembly will not be described in detail. In general, the actuator assembly may comprise a motor connected to a source of power through the umbilical 26. The motor may operate a piston within a chamber. The side of the piston which is in communication with the ports or diaphragms may be provided with a liquid such as hydraulic fluid. On the opposite side of the piston within the chamber there may be a gas, the pressure of which is regulated by means of a balance chamber and a gas regulator. As the piston within the chamber is driven in reciprocating motion by the motor, it attempts to pump hydraulic fluid to and from the diaphragms and, hence, exert an alternating increased pressure and decreased pressure in the fluid 16. The movement of the diaphragms caused by the motor causes corresponding movement within the fluid between the end members 44 and 46. The frequency of those oscillations may be controlled so as to produce a resonant standing wave within the space between the end members 44 and 46. In the configuration of the tool as shown in Figure 4, the distance between the end members 44 and 46 and the frequency of oscillation of the diaphragm may be chosen so that a standing full wave or half-wave may occur in the fluid between the two end members.

An alternate actuator assembly 42 may comprise a spinning valve mechanism based on the principle disclosed in United States Patent Application 07/136,148. In that configuration, fluid is provided through the umbilical 26 to a rotating piston which is ported so as to direct fluid through ports defined in the exterior of the actuator. As the piston rotates at a controlled rate, fluid is jetted through the ports into the surrounding fluid causing corresponding pressure pulsations.

Figure 5 is an elevational view in cross-section of another embodiment of the seismic source for carrying out the technique described earlier in Figure 2. A housing 28 substantially similar to that described above may be used, complete with the same end caps and umbilical attaching means. A difference exists in the resonance generator, shown as 52 in the Figure. Extending along the axis of the housing 28 may be a shaft 54 threaded along its length. One end of the shaft is received in a bearing 56 concentrically located in one end cap 32. The other end of the shaft is coupled to a motor 58 located in the housing 28 and coupled via the umbilical 26 to the ship. Also located in the motor 58 may be an actuator similar to those described above, providing diaphragms or ports in the inside surface 60 of the motor 58. Both the motor 58 and the actuator 42 are in communication with the ship through the umbilical 26. The face 60 of the motor forms one end of the cavity 18, with the other end defined by an end member shown as 62 threadably received along the shaft 54. As mentioned above, in this embodiment, at least one end member should be resilient. For the purpose of this discussion, it will be assumed that end member 62 will be made of resilient material such as that mentioned above. However, the inside face 60 may also contain the resilient material. It is preferred that the end member 62 not rotate with respect to the housing 28. A groove may be longitudinally located along the circumference of the end member which receives a track defined along the inner surface of the housing 28. Thus, when the motor 58 is actuated, the end member travels along the threads of the shaft, following the track along the inner wall of the housing.

In each of the embodiments described above, particular emphasis is to be placed on the concept of being able to move or translate the end member(s) within the housing and varying the distance or volume of the cavity between the end members. Means have been described which are capable of quickly changing the cavity volume, thus capable of varying or sweeping the frequencies generated by the device. It is also important to point out that the signals generated by this device are clean. That is to say that there is substantially little noise associated with the generation of the signal. The means for generating the signal is completely enclosed within a housing not subject to the elements which heretofore have contributed to the noise element i.e. bubble pulses, precursors, etc.

It should be understood that the techniques used to move the end members may be interchanged between the two embodiments. That is the device used to move the end members in the first embodiment may be employed in the second embodiment, and the reverse may also be true. Other variations will occur to those skilled in the art for moving the end members, or for generating the pulses in the fluid within the housing.

While in the foregoing specification, the invention has been described in considerable detail, such detail is provided for the purposes of illustration and not by way of limitation, the invention itself limited only by the scope of the appended claims.

## Claims

1. An apparatus for generating seismic signals in a body of water, comprising:

(a) a housing containing a fluid therein and adapted to be towed in the body of water;

(b) a pair of end means positioned in said housing and separated from each other to define therebetween a cavity containing the fluid;

(c) means communicating with the fluid in said cavity for inducing oscillations in said fluid, whereby the fluid within said cavity generates a resonant standing pressure wave;

(d) coupling means, coupled to the pair of end means for varying the distance between the end means, whereby the resonant frequency of oscillation of said fluid is generated over a range of frequencies; and

(e) means for driving the coupling means in a first and a second direction for effecting the change in distance between the pair of end means within the housing.

2. The apparatus recited in Claim 1, wherein at least one of said end means includes a compressible member in contact with the oscillating fluid.

3. The apparatus recited in Claim 2, wherein said compressible member comprises a pressurized bladder.

4. The apparatus recited in Claim 1, wherein one of said end means is fixed with respect to said housing.

5. An apparatus for use in a body of water for generating a seismic wave in the earth, said apparatus comprising:

(a) a housing containing a fluid and adapted to be deployed in the body of water;

(b) first and second end means disposed within said housing spaced apart from each other defining a volume therebetween, said first and second end means being resilient and substantially sealing said housing and containing the fluid therebetween;

(c) means interconnecting said first and second end means and including oppositely threaded portions;

(d) means housed within said first end means for inducing oscillations in said fluid in said housing contained between said first and second end means, whereby the oscillation of said fluid generates a resonant standing pressure wave; and

(e) means, coupled to the connecting means for rotating the connecting means thereby changing the distance between the first and second end means and varying the resonant frequency of oscillation of said fluid over a range of frequencies.

6. An apparatus for use in a body of water for generating a seismic wave in the earth, said apparatus comprising:

(a) a housing containing a fluid;

(b) first and second end means disposed within said housing at a preselect distance from each other defining a volume therebetween, said first and second end means being resilient and substantially sealing said housing;

(c) connecting means between said first and second end means and including a central portion;

(d) means housed within said central portion for inducing oscillations in said fluid in said housing contained between said end means, whereby the oscillation of said fluid generates a resonant standing pressure wave; and

(e) means for varying the resonant frequency of oscillation of said fluid over a range of frequencies.

7. The apparatus of Claim 5 or 6, wherein said means for inducing oscillations comprises an actuator.

8. The apparatus of Claim 5, 6 or 7, wherein said interconnecting means comprises shaft means for moving said first and second end means relative to each other, whereby the natural resonant frequency of the fluid therebetween may be varied over a range of frequencies.

9. The apparatus of Claim 5, 6 or 7, wherein said interconnecting means comprises shaft means for moving one of said end means relative to the other, whereby the natural resonant frequency of the fluid therebetween may be varied over a range of frequencies.

10. The apparatus of Claim 9 wherein only one of said end means is resilient.

EP 0 331 428 A2

FIGURE 1

FIGURE 2

FIGURE 3

FIGURE 4

FIGURE 5